# EUROPÄISCHE PATENTSCHRIFT

(11) **EP 3 621 833 B1**
(45) Veröffentlichungstag und Bekanntmachung des Hinweises auf die Patenterteilung: **06.09.2023**
(21) Anmeldenummer: 18724801.8
(22) Anmeldetag: 04.05.2018
(51) Int. Cl.: B60H 1/00, H04L 12/40

(54) **VERFAHREN UND MOBILES ENDGERÄT ZUM STEUERN MINDESTENS EINER KLIMAEINRICHTUNG**
METHOD AND MOBILE TERMINAL FOR CONTROLLING AT LEAST ONE AIR-CONDITIONER DEVICE
PROCÉDÉ ET TERMINAL MOBILE PERMETTANT DE COMMANDER AU MOINS UNE INSTALLATION DE CLIMATISATION

(30) Priorität: 08.05.2017 DE 102017109860
(43) Veröffentlichungstag der Anmeldung: 18.03.2020
(73) Patentinhaber: Webasto SE, 82131 Stockdorf (DE)
(72) Erfinder: FELLNER, Günther, 82131 Stockdorf (DE); THÜRMER, Daniel, 82131 Stockdorf (DE)
(74) Vertreter: Prüfer & Partner mbB Patentanwälte · Rechtsanwälte
(86) Internationale Anmeldenummer: PCT/EP2018/061531
(87) Internationale Veröffentlichungsnummer: WO 2018/206437

(56) Entgegenhaltungen:
- EP-A1- 2 688 267
- EP-A2- 1 376 991
- DE-A1-102007 012 304
- DE-A1-102009 029 416

## Beschreibung

Die Erfindung betrifft ein Verfahren und mobiles Endgerät zum Steuern mindestens einer Klimaeinrichtung sowie ein System und ein computerlesbares Speichermedium zur Umsetzung des Verfahrens.

Moderne Fahrzeuge können mit unterschiedlichen Klimaeinrichtungen, z. B.

Heizern, Lüftern und Kühlaggregaten ausgestattet sein. Weiterhin ist es bekannt, Fahrzeuge mit entsprechenden Klimaeinrichtungen nachträglich auszustatten. So ist es möglich, in ein Fahrzeug nachträglich eine Klimaeinrichtung, beispielsweise eine Standheizung, einzubauen.

Entsprechende Klimaeinrichtungen verfügen teilweise über Kommunikationseinrichtungen zum drahtlosen Kommunizieren mit einer Bedieneinheit. So ist es bekannt, kleine Fernbedienungen vorzusehen, die mit einer Reichweite von ca.200 bis 1000 Metern das Starten und ggf. auch das Stoppen des Betriebs einer Standheizung ermöglichen.

Weiterhin gibt es Steuermöglichkeiten der Klimaeinrichtungen mittels mobiler Endgeräte, beispielsweise Smartphones und Tablets. Diese kommunizieren über ein zelluläres Netz, beispielsweise GSM, mit der Klimaeinrichtung und bilden eine ähnliche Funktion ab, wie diese durch die bereits beschriebenen Fernbedienungen angeboten wird.

Das Dokument EP 2688267 A1 zeigt Datenübertragung vom Fahrzeug zur Fernbedienungseinheit.

Die Steuermöglichkeiten, die entsprechende Systeme anbieten, sind stark beschränkt. So kann es passieren, dass beispielsweise aufgrund eines zu niedrigen Ladezustands der Batterie ein Steuerbefehl nicht ausgeführt wird, ohne dass der Benutzer hiervon Kenntnis erlangt.

Ausgehend von diesem Stand der Technik ist es Aufgabe der vorliegenden Erfindung, ein verbessertes Verfahren zum Steuern mindestens einer Klimaeinrichtung anzugeben. Insbesondere sollen bestehende Nachteile aus dem Stand der Technik behoben werden. Die Erfindung soll einen sicheren, wirtschaftlichen und zuverlässigen Betrieb der Klimaeinrichtung ermöglichen. Des Weiteren soll ein mobiles Endgerät zum Steuern der mindestens einen Klimaeinrichtung sowie ein System zur Implementierung des Verfahrens angegeben werden.

Diese Aufgabe wird verfahrensseitig durch ein Verfahren gemäß dem Anspruch 1 gelöst.

Erfindungsgemäß wird die Aufgabe durch ein Verfahren zum Steuern mindestens einer Klimaeinrichtung eines Fahrzeugs gelöst, wobei das Verfahren die nachfolgenden Schritte umfasst, die von einem mobilen Endgerät durchgeführt werden:
- Abfragen von ersten Statusdaten von einem ersten Bus, vorzugsweise einem Klimabus, der mit der mindestens einen Klimaeinrichtung verbunden ist, über eine Funkschnittstelle;
- Abfragen von zweiten Statusdaten von einem zweiten Bus, insbesondere einem Fahrzeugbus, der mit mindestens einem Aktuator und/oder Sensor verbunden ist, über die Funkschnittstelle;
- Anzeigen der ersten und zweiten Statusdaten auf einem Display;
- Empfangen mindestens einer Benutzereingabe;
- Verarbeitung der Benutzereingabe;
- Erstellen eines Steuerbefehls basierend auf der Benutzereingabe und unter mindestens einem Datenelement der ersten und/oder zweiten Statusdaten;
- Übermitteln des Steuerbefehls über die Funkschnittstelle an die Klimaeinrichtung.

Ein Gedanke der vorliegenden Erfindung besteht darin, Statusdaten, die den Zustand mindestens einer Komponente in dem Fahrzeug beschreiben, vor dem Erstellen eines Steuerbefehls abzufragen und anzuzeigen. Erfindungsgemäß werden hierfür Statusdaten von einem ersten Bus abgegriffen, der zumindest mit der mindestens einen Klimaeinrichtung verbunden ist, sowie Statusdaten von einem weiteren zweiten Bus, beispielsweise einem Fahrzeugbus. Der zweite Bus kann mit einem oder mehreren Aktuatoren und/oder Sensoren verbunden sein. Vorzugsweise liefert der zweite Bus Informationen über Fahrzeugkomponenten, wie beispielsweise die Batterie, den Fahrzeugtank und/oder allgemeine Angaben über den Zustand des Fahrzeugs, z.B. Betriebszustand des Fahrzeugs.

Unter Verwendung der Erfindung ist es dem Benutzer also möglich, vor dem Absetzen eines Steuerbefehls den Zustand des Fahrzeugs sowie der Klimaeinrichtung zu erfassen und in Reaktion hierauf bestimmte Steuerbefehle abzugeben. Erfindungsgemäß wird der Steuerbefehl basierend auf einer Benutzereingabe und mindestens einem Datenelement der ersten Statusdaten erzeugt. So kann beispielsweise abgefragt werden, ob die Klimaeinrichtung sich grundsätzlich in einem betriebsbereiten Zustand befindet. In Abhängigkeit von den gewonnenen Erkenntnissen kann das erfindungsgemäße Verfahren das Absetzen eines Steuerbefehls zum Starten der Klimaeinrichtung zulassen oder verbieten. Dementsprechend kann, je nachdem ob die Klimaeinrichtung bereits läuft oder nicht, ein Benutzerbefehl unterschiedlich interpretiert werden.

Beispielsweise kann die Eingabe eines Benutzerbefehls, der eine Leistungserhöhung fordert, im abgeschalteten Zustand dazu führen, dass zunächst ein Steuerbefehl abgesetzt wird, der die Klimaeinrichtung startet, und dann ein weiterer Steuerbefehl versandt wird, der die Leistung der Klimaeinrichtung entsprechend der Eingabe anpasst. Soweit in der beschriebenen Ausführungsform die Klimaeinrichtung bereits gestartet ist, kann die Benutzereingabe derart interpretiert werden, dass lediglich die Leistung in entsprechender Weise angepasst wird.

Die Erfindung ermöglicht es, diverse Informationen über das Fahrzeug und die Klimaeinrichtung zu erfassen und diese anzuzeigen. Weiterhin können diese Informationen bei der Durchführung des Steuerverfahrens "intelligent" genutzt werden, um eine möglichst effiziente Steuerung der Klimaeinrichtung zu ermöglichen. So kann eine das Verfahren umsetzende Software oder App eine graphische Benutzeroberfläche nutzen, die eine wesentlich effizientere Bedienung der Klimaeinrichtung ermöglicht. Hierdurch wird eine Fehlbedienung verhindert. Das Verfahren kann lernfähig sein bzw. auf einem lernfähigen System umgesetzt werden, dass dem Benutzer die Bedienung der Klimaeinrichtung erleichtert. Es können Algorithmen und/oder Datenstrukturen eingesetzt werden, die aus der Entwicklung im Bereich der "Künstlichen Intelligenz" bekannt sind.

In einer Ausführungsform wird basierend auf mindestens einem Datenelement der ersten Statusdaten und mindestens einem Datenelement der zweiten Statusdaten ein Wert errechnet und angezeigt. Mit der erfindungsgemäßen Lehre ist es möglich, unterschiedliche Informationen abzufragen und miteinander zu verbinden. So kann beispielsweise eine Leistungsaufnahme der Klimaeinrichtung abgefragt und mit Angaben über den Ladezustand einer Batterie verglichen werden. Im Ergebnis kann der Benutzer des Steuerverfahrens mit Informationen versorgt werden, die es ihm ermöglichen, eine Betriebsdauer abzuschätzen. Insofern kann das Verfahren auch eingesetzt werden, um eine Fehlbedienung, bei der es beispielsweise zu einer vollständigen Entladung der Batterie kommt, zu verhindern.

In einer Ausführungsform werden mindestens einige Statusdaten mittelbar über eine Gatewayeinrichtung abgefragt.

Es ist möglich, die Kommunikation mit dem ersten und dem zweiten Bus auf unterschiedliche Art und Weise zu implementieren. In einer bevorzugten Ausführungsform wird eine Gatewayeinrichtung verwendet, die sowohl mit dem ersten als auch mit dem zweiten Bus verbunden ist. Vorzugsweise verfügt die Gatewayeinrichtung über mindestens eine Kommunikationseinrichtung zur drahtlosen Kommunikation. Die Gatewayeinrichtung kann zusätzlich Steueraufgaben wahrnehmen, und die Klimaeinrichtung gemäß den empfangenen Steuerbefehlen steuern. Das Vorsehen einer Gatewayeinrichtung hat den Vorteil, dass relevante Informationen an einer zentralen Stelle gesammelt werden. Weiterhin kann die Gatewayeinrichtung eine standardisierte drahtlose Kommunikation anbieten, so dass unabhängig von den Fahrzeugtypen mit der Gatewayeinrichtung auf einfache Art und Weise implementiert werden kann. Für die Kommunikation mit Fahrzeugkomponenten, beispielsweise auf dem zweiten Bus, kann die Gatewayeinrichtung entsprechend spezifische Schnittstellen aufweisen. In einer Ausführungsform verfügt die Gatewayeinrichtung über eine Schnittstelle, die zur Kommunikation mit unterschiedlichen Bussystemen programmiert werden kann.

In einer Ausführungsform umfasst das Verfahren zusätzlich die folgenden Schritte:
- ein Prüfen der Verfügbarkeit einer Reihe von Kommunikationskanälen zu einer Gatewayeinrichtung des Fahrzeugs;
- ein Auswählen eines Kommunikationskanals in Abhängigkeit von der Verfügbarkeit und einer Prioritätenliste, wobei das beschriebene Abfragen der ersten und/oder zweiten Statusdaten über den ausgewählten Kommunikationskanal erfolgt.

Erfindungsgemäß ist es möglich, beispielsweise die Gatewayeinrichtung mit mehreren unterschiedlichen Möglichkeiten zur drahtlosen Kommunikation auszustatten. Diesbezüglich sind beispielsweise Kommunikationseinrichtungen denkbar, die eine WiFi-Kommunikation, eine GSM-Kommunikation und/oder eine Bluetooth-Kommunikation ermöglichen. In einer Ausführungsform der Erfindung kann ein zugehöriges Endgerät entsprechende Kommunikationseinrichtungen aufweisen, so dass vor einer Kommunikation mit der Gatewayeinrichtung unterschiedliche Kommunikationskanäle abzuprüfen sind. Das erfindungsgemäße Verfahren wählt dann einen verfügbaren Kommunikationskanal aus. Soweit mehrere Kommunikationskanäle zur Verfügung stehen, kann ein bevorzugter Kommunikationskanal, z.B. einer, der keine Kosten generiert, ausgewählt und genutzt werden.

In einer Ausführungsform umfasst das Verfahren (zusätzlich) die folgenden Schritte:
- ein Auslesen eines Benutzerprofils aus einer Speichereinrichtung eines mobilen Endgeräts;
- ein Verarbeiten von Daten des Benutzerprofils;
- ein Generieren mindestens eines Steuerbefehls basierend auf den Daten des Benutzerprofils;
- ein Übermitteln des Steuerbefehls an die Klimaeinrichtung und/oder eine Komponente des Fahrzeugs, vorzugsweise unter Verwendung einer/der Gatewayeinrichtung.

Das erfindungsgemäße Verfahren kann also dazu genutzt werden, um Einstellungen an der Klimaeinrichtung und/oder anderen Fahrzeugkomponenten benutzerspezifisch vorzunehmen. Hierfür kann in einer Speichereinrichtung eines mobilen Endgeräts ein entsprechendes Benutzerprofil angelegt werden. Dieses Benutzerprofil kann beispielsweise Angaben über eine bestimmte Klappenstellung enthalten, die so gewählt sind, dass der Benutzer im Fahrzeug nach dem Aktivieren der Klimaeinrichtung nicht direkt angeblasen wird. Das erfindungsgemäße Verfahren nutzt die Daten, die dem Benutzer zugeordnet sind, um Steuerbefehle zu generieren, die letztendlich zu einer Fahrzeugkonfiguration führen, die für den Benutzer vorteilhaft ist. In einer Ausführungsform ist es denkbar, bei einem Fahrzeug, das von unterschiedlichen Personen genutzt wird, beim Aussteigen eine Konfiguration abzuspeichern und diese beispielsweise nach der Nutzung durch eine andere Person beim erneuten Einsteigen in das Fahrzeug wiederherzustellen.

In einer Ausführungsform werden ein Ladezustand einer Batterie des Fahrzeugs und/oder ein Tankfüllungszustand abgefragt. Erfindungsgemäß können die Zustände als Statusdaten angezeigt und/oder verarbeitet werden. Wie bereits erläutert, ermöglichen es der Ladezustand und/oder die Angaben über die Tankfüllung, Aussagen darüber zu treffen, wie lange eine bestimmte Klimaeinrichtung bei einem bestimmten Betriebsmodus betrieben werden kann. Ebenso ist es möglich, in Abhängigkeit von dem Ladezustand einer Batterie einen bestimmten zu beheizenden Bereich auszuwählen. So gibt es Fahrzeuge, bei denen mehrere Kühlkreise, beispielsweise zum Kühlen/Beheizen des Motorraums und zum Kühlen/Beheizen der Fahrgastzelle vorgesehen sind. Das erfindungsgemäße Verfahren kann in Abhängigkeit von dem Ladezustand der Batterie davon absehen, den Motorraum zu beheizen und demgemäß die Steuerbefehle entsprechend anpassen.

Die eingangs genannte Aufgabe wird weiterhin durch ein mobiles Endgerät gemäß Anspruch 7, umfassend mindestens eine Recheneinheit, mindestens eine Speichereinrichtung und mindestens eine Funkkommunikationseinrichtung, gelöst. Die Speichereinrichtung weist vorzugsweise Instruktionen zur Implementierung der bereits beschriebenen Verfahrensschritte auf. Die Funkkommunikationseinrichtung kann dazu genutzt werden, die ersten und/oder zweiten Statusdaten abzufragen. Weiterhin kann die Kommunikationseinrichtung dazu genutzt werden, um den mindestens einen Steuerbefehl zu übermitteln.

Auch im Zusammenhang mit dem mobilen Endgerät ergeben sich die in Verbindung mit den Verfahren erläuterten Vorteile.

Die eingangs genannte Aufgabe wird weiterhin durch ein System gemäß Anspruch 8 gelöst.

Das System kann ein mobiles Endgerät, wie dies vorhergehend erläutert wurde, sowie eine Gatewayeinrichtung umfassen. Die Gatewayeinrichtung kann eine Kommunikationseinrichtung zur drahtlosen Kommunikation umfassen, wobei die Kommunikationseinrichtung zur Kommunikation, insbesondere mittels Bluetooth, mit dem mobilen Endgerät ausgebildet ist. Die Kommunikationseinrichtung kann aufsteckbar sein, so dass ein nachträgliches Aufrüsten der Gatewayeinrichtung möglich ist.

In einer Ausführungsform weist die Gatewayeinrichtung mehrere Kommunikationseinrichtungen, beispielsweise eine erste und eine zweite Kommunikationseinrichtung, auf. Die erste Kommunikationseinrichtung kann zum drahtlosen Kommunizieren via Bluetooth und/oder WiFi mit dem mobilen Endgerät ausgebildet sein. Die zweite Kommunikationseinrichtung kann drahtlos mit dem mobilen Endgerät über ein zelluläres Netzwerk, beispielsweise über den GSM oder UMTS-Standard kommunizieren.

Beim entsprechenden System kann zwischen unterschiedlichen Kommunikationskanälen ausgewählt werden, so dass auch in Abhängigkeit der Entfernung zwischen dem mobilen Endgerät und der Gatewayeinrichtung stets eine zuverlässige Kommunikation gewährleistet wird.

In einer Ausführungsform ist die Gatewayeinrichtung dazu ausgebildet, als Master auf dem Klimabus zu kommunizieren, und umfasst eine Steuerungseinrichtung zum Steuern der Klimaeinrichtung.

In einer Ausführungsform können die Klimaeinrichtung und/oder das Bedienelement jeweils als Slave des Klimabus ausgebildet sein.

In einer Ausführungsform kann die Klimaeinrichtung als ein Gebläse und/oder Lüfter ausgebildet sein. Es ist also auch möglich, dass lediglich ein Gebläse mit der Gatewayeinrichtung betrieben wird. Somit kann auch bereits eingebaute Hardware eines Fahrzeugs über die Gatewayeinrichtung gesteuert werden.

In einer Ausführungsform kann die Kommunikationseinrichtung aufsteckbar sein, z.B. in Form einer Platine, wobei die Kommunikationseinrichtung zur Kommunikation, insbesondere mittels Bluetooth, mit einem/dem mobilen Endgerät ausgebildet sein kann.

Die Gatewayeinrichtung verfügt erfindungsgemäß über die Möglichkeit, Daten über eine Kommunikationseinrichtung drahtlos zu empfangen bzw. zu senden. Der Klimabus und die an diesen angeschlossenen Einrichtungen werden daher für Geräte, die sich außerhalb des Fahrzeugs bzw. außerhalb der Fahrzeughardware befinden, zugänglich.

Die Gatewayeinrichtung kann umfassen:
- mindestens eine Recheneinrichtung;
- mindestens eine Speichereinrichtung mit Instruktionen, wobei die Instruktionen einen Webserver implementieren, wenn diese auf der Recheneinheit ausgeführt werden.

Die auf dem Webserver implementierten Algorithmen können lernfähig sein und dem Benutzer die Bedienung der Klimaeinrichtung erleichtern. Es können Algorithmen und/oder Datenstrukturen eingesetzt werden, die aus der Entwicklung im Bereich der "Künstlichen Intelligenz" bekannt sind.

Die eingangs genannte Aufgabe wird weiterhin durch ein computerlesbares Speichermedium mit Instruktionen gemäß Anspruch 12 gelöst, die mindestens einen Prozessor dazu veranlassen, ein Verfahren zu implementieren, wie dies bereits vorab beschrieben wurde.

Weitere vorteilhafte Ausführungsformen ergeben sich anhand der Unteransprüche.

Nachfolgend wird die Erfindung anhand von mehreren Ausführungsbeispielen beschrieben, die mittels Abbildungen näher erläutert werden. Hierbei zeigen:
- Fig. 1: eine schematische Ansicht eines Fahrzeugs mit einem Klimabus, wobei an den Klimabus einige Komponenten, umfassend eine Klimaeinrichtung, angeschlossen sind;
- Fig. 2: eine schematische Ansicht einer Gatewayeinrichtung zur Nutzung in einem Fahrzeug gemäß Fig. 1;
- Fig. 3: eine schematische Ansicht eines mobilen Endgeräts, das mit der Gatewayeinrichtung aus Fig. 2 drahtlos kommuniziert.

In der nachfolgenden Beschreibung werden für gleiche und gleichwirkende Teile dieselben Bezugsziffern verwendet.

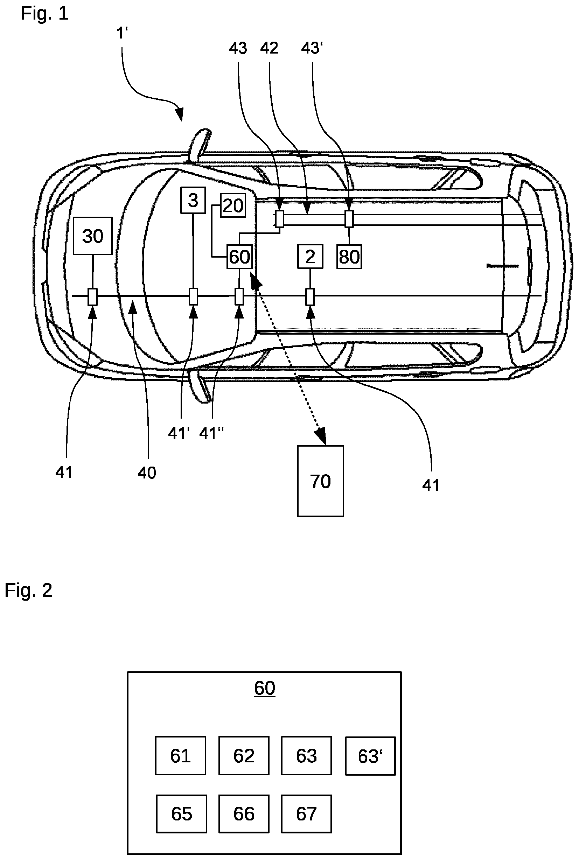

Die Fig. 1 zeigt ein Fahrzeug 1 und ein mobiles Endgerät 70. Das Fahrzeug 1 ist mit den Komponenten dargestellt, die für das Verständnis der Erfindung wichtig sind. So verfügt das Fahrzeug 1 über einen Heizer 30, eine Gatewayeinrichtung 60, ein Bedienelement 2, eine Lüftungseinrichtung 20 und eine Lüfterklappe 3. Der Heizer 30, die Gatewayeinrichtung 60 und das Bedienelement 2 sind an dem Klimabus 40 über Anschlüsse 41, 41', 41" angeschlossen und über den Klimabus 40 miteinander verbunden. In dem gezeigten Ausführungsbeispiel ist der Klimabus 40 als proprietäter W-Bus ausgebildet.

Der W-Bus zeichnet sich dadurch aus, dass ein Master die Kommunikation zwischen einer Vielzahl von Slaves untereinander und mit dem Master steuert. Der Master kann also ohne eine Abstimmung mit anderen Komponenten, eine Kommunikation initiieren. Der in der Fig. 1 gezeigte Klimabus 40 verfügt über einen Draht, der mittels eines Pull-Up Wiederstandes an seinem Ende terminiert ist.

Die Gatewayeinrichtung 60 ist im gezeigten Ausführungsbeispiel als Master des Klimabus 40 ausgebildet und nutzt zur Kommunikation eine Bus-Kommunikatonseinrichtung 63. Der Heizer 30, die Lüfterklappe 3 und das Bedienelement 2 sind als Slaves ausgebildet. Das bedeutet, dass die Gatewayeinrichtung 60 unaufgefordert Daten an den Heizer 30, die Lüfterklappe 3 sowie das Bedienelement 2 senden kann. Jene Komponenten, die als Slave auf dem Klimabus 40 agieren, müssen zunächst bei der Gatewayeinrichtung 60 anfragen, ob sie eine Kommunikation auf dem Klimabus 40 ausführen dürfen.

In dem Ausführungsbeispiel der Fig. 1 ist das Bedienteil 2 als Eingabe/Ausgabegerät ausgebildet. Der Fahrer des Fahrzeugs 1 kann über das Bedienteil 2 eine Soll-Temperatur als Zielparameter im Innenraum des Fahrzeugs 1 eingeben. Das Bedienteil 2 sendet daraufhin die Soll-Temperatur als Zielparameter über den Anschluss 41 auf dem Klimabus 40 an die Gatewayeinrichtung 60. Die Gatewayeinrichtung 60 umfasst einen Temperatursensor 67, der die Temperatur im Innenraum des Fahrzeugs 1 misst. Wenn die durch den Fahrer eingestellte Soll-Temperatur nicht dem gemessenen Temperaturwert im Inneren des Fahrzeugs 1 entspricht, so sendet die Gatewayeinrichtung 60 einen Steuerbefehl über den Klimabus 40 an den Heizer 30. Wenn die Gatewayeinrichtung 60 festgestellt hat, dass die Temperatur im Inneren des Fahrzeugs 1 zu gering ist, so wird der Heizer 30 dazu veranlasst, zu heizen. Der Heizer 30 heizt den Fahrzeuginnenraum so lange, bis die Gatewayeinrichtung 60 mittels ihres Temperatursensors 67 misst, dass die Soll-Temperatur, die vom Fahrer eingegeben wurde, erreicht ist.

Um ein effizientes Heizen des Fahrzeuginnenraums des Fahrzeugs 1 zu ermöglichen, sendet die Gatewayeinrichtung 60 zusätzlich Steuerbefehle an die Lüfterklappe 3. Die Lüfterklappe 3 umfasst einen Aktuator, z.B. einen Servomotor oder einen Schrittmotor, der dazu ausgebildet ist, einen Einstellwinkel der Lüfterklappe 3 zu verändern. Im gezeigten Ausführungsbeispiel wird die Lüfterklappe 3 derart eingestellt, dass ein möglichst großer Luftstrom durch sie hindurchströmen kann, z.B. auf 90°.

Damit die erwärmte Luft durch die Lüfterklappe 3 hindurchströmen kann, sendet die Gatewayeinrichtung 60 darüber hinaus ein Pulsweitenmodulationssignal (PWM-Signal) an die Lüftungseinrichtung 20. Hierzu verfügt die Gatewayeinrichtung 60 über einen PWM-Controller, z.B. einen Mikrocontroller, der ein entsprechendes Signal über eine Lüftungsverbindung 21 ausgibt, die die Gatewayeinrichtung 60 mit der Lüftungseinrichtung 20 verbindet. Die Lüftungseinrichtung 20 verfügt über einen Motor, der durch das PWM-Signal angetrieben wird.

Darüber hinaus umfasst die Gatewayeinrichtung 60 ein Bluetooth-Modul 62 (siehe Fig. 2), das zur drahtlosen Kommunikation mit einem sich in der Nähe befindlichen Gerät eingesetzt werden kann. Zum Beispiel kann eine Bluetooth-Verbindung mit einem mobilen Endgerät 70 hergestellt werden. Auch das mobile Endgerät 70, bei dem es sich beispielsweise um ein Smartphone des Fahrers handelt, kann verwendet werden, um eine gewünschte Temperatur im Innenraum des Fahrzeugs 1 einzustellen. Nach der Eingabe eines Solltemperaturwerts sendet das Smartphone 70 einen Steuerbefehl über die Bluetooth-Verbindung an die Gatewayeinrichtung 60. Die Gatewayeinrichtung 60 reicht den Steuerbefehl an den Heizer 30 weiter oder erzeugt basierend auf dem eingegangenen Steuerbefahl weitere (z.B. klimabusspezifische) Steuerbefehle, die über den Klimabus 40 an die Klimaeinrichtung 30 gesendet werden. So wird der Heizer 30 derart gesteuert, dass die Temperatur im Fahrzeuginnenraum dem Soll-Temperaturwert entspricht.

Darüber hinaus kann die Gatewayeinrichtung 60 Statusinformationen, insbesondere Statusdaten, über die an dem Klimabus 40 angeschlossenen Geräte an das mobile Endgerät 70 senden. Zum Beispiel kann es sich bei den Statusinformationen um Wartungshinweise, Sensordaten, Herstellerinformationen oder Fehlermeldungen handeln. Statusdaten, die sich auf den Klimabus 40 beziehen, geben vorzugsweise einen Betriebszustand des Heizers 30 (AN oder AUS) und eine Betriebsleistung (z.B. 70 % der Maximalleistung) an. Der Fahrer des Fahrzeugs 1 hat daher Zugriff auf sämtliche Informationen, die die an den Klimabus 40 angeschlossenen Geräte betreffen.

Das Fahrzeug 1 verfügt zusätzlich zu dem Klimabus 40 über einen Fahrzeugbus 42. An dem Fahrzeugbus 42 sind die Gatewayeinrichtung 60 über eine Bus-Kommunikationseinrichtung 63' und ein Klimabedienteil 80 angeschlossen. Die Gatewayeinrichtung 60 ist als Slave des Fahrzeugbus 42 ausgebildet. Die Gatewayeinrichtung 60 nimmt also eine Doppelfunktion ein. Zum einen agiert sie als Master auf dem Klimabus 40 und zum anderen als Slave auf dem Fahrzeugbus 42. In einer erfindungsgemäßen Ausführungsform hat die Gatewayeinrichtung 60 bezüglich des Fahrzeugbus 42 lediglich eine Überwachungs-/Lesefunktion und hört den Datenverkehr auf dem Fahrzeugbus 42 lediglich ab. Im dargestellten Ausführungsbeispiel der Fig. 2 wird das Klimabedienteil 80 dazu verwendet, eine Benutzereingabe anzunehmen und über den Fahrzeugbus 42 der Gatewayeinrichtung 60 als Statusinformationen, insbesondere Fahrzeugdaten, zur Verfügung zu stellen.

Die Bluetooth-Kommunikationseinrichtung 62 wird erfindungsgemäß genutzt, um Fahrzeugdaten, die über den Fahrzeugbus 42 empfangen werden, an das mobile Endgerät 70 zu kommunizieren. Solche Fahrzeugdaten können Datenelemente umfassen, die Angaben über den Füllzustand des Tanks des Fahrzeugs 1 und den Batteriefüllstand des Fahrzeugs 1 umfassen.

Zusätzlich zu der Bluetooth-Kommunikationseinrichtung 62 umfasst die Gatewayeinrichtung 60 ein aufsteckbares LTE-Modul 68 zur Kommunikation in einem LTE-Netzwerk. In dem Ausführungsbeispiel gibt es also mehrere Möglichkeiten (Kommunikationskanäle), über die das mobile Endgerät 70 mit der Gatewayeinrichtung 60 kommunizieren kann. Für eine Kommunikation mit der Gatewayeinrichtung 60 ist es nicht erforderlich, dass sich das Smartphone 70 in der Nähe des Fahrzeugs 1 befindet. Es wird also ermöglicht, dass ein Fahrer des Fahrzeugs 1 von einem beliebigen Ort auf der Welt die Komponenten des Fahrzeugs 1 über die Gatewayeinrichtung 60 steuert und/oder von diesen Komponenten Statusdaten erhält, die bei der Steuerung ggf. berücksichtigt werden. Auf Grund dieser Funktion kann der Fahrer mittels des mobilen Endgeräts 70 über die Gatewayeinrichtung 60 Informationen abfragen, die auf dem Klimabus 40 oder auf dem Fahrzeugbus 42 übertragen werden. Dem Fahrer können daher umfassende Informationen zu dem Zustand des Fahrzeugs 1 angezeigt werden. Erfindungsgemäß werden diese Informationen genutzt, um auf das Endgerät 70 Dienste anzubieten, die eine sehr komfortable und effiziente Steuerung des Klimasystems der Fahrzeugs 1 ermöglichen.

Die Fig. 2 zeigt eine schematische Darstellung der Gatewayeinrichtung 60. Die Gatewayeinrichtung 60 umfasst eine Recheneinheit 61, die z.B. als Mikrocontroller ausgebildet ist. Die Recheneinrichtung 61 ist dazu ausgebildet, Statusdaten über die Bus-Kommunikationseinrichtungen 63, 63' zu empfangen und anschließend zu verarbeiten. Darüber hinaus verfügt die Gatewayeinrichtung 60 über ein Bluetooth-Modul 62 zur drahtlosen Kommunikation mit dem Endgerät 70. In einem Ausführungsbeispiel ist eine weitere Kommunikationseinrichtung zur Kommunikation mit einem zellulären und/oder einen lokalen Netzwerk vorgesehen.

Die Bus-Kommunikationseinrichtungen 63, 63' sind zum Empfangen und zum Senden von Daten über den Klimabus 40 bzw. den Fahrzeugbus 42 ausgebildet. Empfangene Daten können in einer Speichereinrichtung 65 gespeichert werden, so dass die Recheneinheit 61 diese verarbeiten kann.

In einem Ausführungsbeispiel kann nur die Gatewayeinrichtung 60 nachgerüstet werden. Dabei kann auf den Einbau zusätzlicher Klimaeinrichtungen 30 oder Bedienelemente 2 verzichtet werden. So wird es ermöglicht, dass z.B. ein bestehendes Klimasystem eines Fahrzeugs 1 mittels der Gatewayeinrichtung 60 überwacht und/oder gesteuert wird. D.h. nach dem Einbau kann der Benutzer oder Fahrer des Fahrzeugs 1 über das mobile Endgerät 70 auf die Informationen zugreifen, die in unmittelbarem und mittelbarem Zusammenhang mit dem Klimasystem stehen. In einem Ausführungsbeispiel ermöglicht es die erfindungsgemäße Gatewayeinrichtung 60, auch Statusdaten abzufragen, die nur entfernt oder gar nicht in Bezug zu der Klimaeinrichtung 30 oder dem Klimasystem stehen.

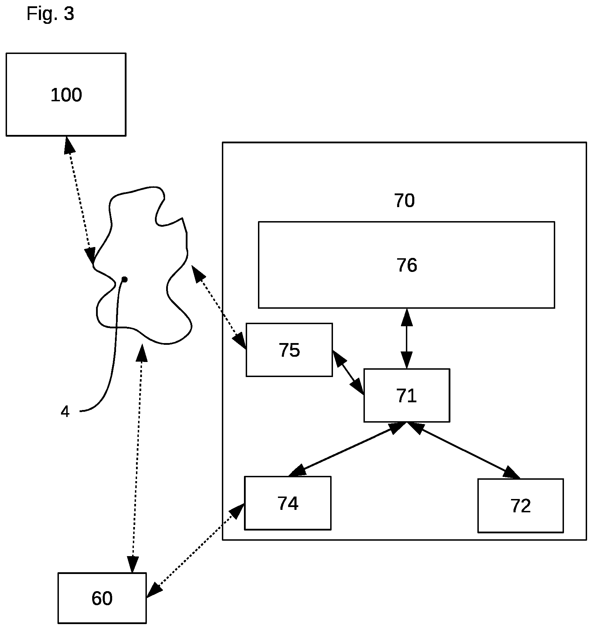

Fig. 3 zeigt stark schematisch ein erfindungsgemäß individualisiertes mobiles Endgerät 70, das mit dem Internet 4 sowie mit der Gatewayeinrichtung 60 in kommunikativer Verbindung steht. Erfindungsgemäß ist es somit möglich, dass für die Kommunikation mit der Gatewayeinrichtung 60 mehrere Kommunikationswege, nämlich ein erster Kommunikationsweg direkt über Bluetooth, und ein zweiter Kommunikationsweg indirekt über das Internet zur Verfügung steht.

Das mobile Endgerät 70 umfasst, ähnlich wie die Gatewayeinrichtung 60, eine Recheneinrichtung 71 sowie eine Speichereinrichtung 72, die Instruktionen zur Implementierung des erfindungsgemäßen Verfahrens aufweist. Wenn diese Instruktionen auf der Recheneinheit 71 ausgeführt werden, veranlassen sie diese, das erfindungsgemäße Verfahren umzusetzen.

Zur Kommunikation mit dem Fahrer ist ein Touchscreen 76 vorgesehen, der das Ein- und Ausgeben von Daten ermöglicht. Insbesondere können über den Touchscreen 76 Benutzereingaben empfangen werden und Statusdaten, die beispielsweise von der Gatewayeinrichtung 60 abgefragt wurden, angezeigt werden. Zur Kommunikation mit der Gatewayeinrichtung 60 umfasst das mobile Endgerät 70 ein Bluetooth-Modul 74 sowie ein UMTS-Modul 75, das, wie schematisch angedeutet, die Verbindung zum Internet 4 herstellt. Die Verbindung zum Internet 5 kann erfindungsgemäß auch dazu genutzt werden, um Informationen von einem Server 100 abzufragen oder dort relevante Informationen zu speichern. Beispielsweise können einem bestimmten Klimasystem zugeordnete Benutzerprofile auf dem mobilen Endgerät 70 und auf dem Server 100 abgelegt sein.

Weiterhin ist es mit dem erfindungsgemäßen Verfahren möglich, Diagnoseinformationen, die von der Gatewayeinrichtung 60 abgefragt wurden, mit Informationen von dem Server 100 abzugleichen und basierend hierauf eine Eigendiagnose des Klimasystems durchzuführen. Alternativ oder zusätzlich lassen sich entsprechende Diagnoseinformationen vorab auf dem Server 100 speichern, so dass diese beispielsweise von einer Werkstatt abgefragt und/oder ausgewertet werden können.

In einem Ausführungsbeispiel der Erfindung fragt das mobile Endgerät 1 Fahrzeugdaten und Klimadaten, die sich auf den Heizer 30 beziehen, von der Gatewayeinrichtung 60 ab. In einem Ausführungsbeispiel handelt es sich bei den Fahrzeugdaten um eine Information, die den Ladezustand der Fahrzeugbatterie angibt. Die Klimadaten geben an, dass der Heizer 30 ausgeschaltet ist. Diese Informationen werden auf dem Touchscreen 76 des mobilen Endgeräts 70 angezeigt. Erfindungsgemäß kann der Fahrer einen Knopf betätigen, der besagt, dass die Klimaeinrichtung, nämlich der Heizer 30, gestartet werden soll. Das mobile Endgerät 70 verarbeitet diese Eingabe und stellt fest, dass aufgrund eines niedrigen Ladezustands der Batterie es sinnvoll ist, nicht alle vorhandenen Heizkreisläufe, die in dem Fahrzeug vorgesehen sind, zu beheizen. Stattdessen soll lediglich der Heizkreislauf genutzt werden, der unmittelbar zum Beheizen der Fahrgastzelle führt. Dementsprechend setzt das mobile Endgerät 70 einen entsprechenden Steuerbefehl ab, der über das Bluetooth-Modul 74 an die Gatewayeinrichtung 60 übertragen wird. Die Gatewayeinrichtung 60 verarbeitet ihrerseits diesen Steuerbefehl und generiert basierend auf dem empfangenen Steuerbefehl weitere Steuerbefehle. Ein erster Steuerbefehl aktiviert den Heizer 30. Ein zweiter Steuerbefehl sorgt für die Zirkulation in dem besagten ausgewählten Heizkreislauf, der zu einem Beheizen der Fahrgastzelle führt.

In einer Ausführungsform sind auf dem mobilen Endgerät 70 Profildaten des Benutzers gespeichert, die eine bestimmte Klappenstellung als bevorzugte Klappenstellung vorgeben. Das mobile Endgerät kann in Reaktion auf eine Benutzereingabe und/oder automatisch bei der Annäherung an das Fahrzeug 1 Steuerbefehle generieren und an die Gatewayeinrichtung 60 übermitteln, die diese veranlassen, entsprechende Steuerbefehle zur Einstellung der Klappen abzusetzen.

In einem Ausführungsbeispiel ermöglicht es das mobile Endgerät 70, weitere Informationen, beispielsweise den Kilometerstand des Fahrzeugs 1, die Außentemperatur, den Füllstand des Tanks, und/oder Diagnoseinformationen über die Gatewayeinrichtung 60 abzufragen und dem Benutzer auf dem Touchscreen 76 anzuzeigen. Erfindungsgemäß ist es möglich, einige oder alle dieser Informationen zu nutzen, um eine situationsabhängige Steuerung des Klimasystems vorzunehmen. So kann die Außentemperatur beispielsweise genutzt werden, um eine Leistungsstufe zum Betreiben des Heizers 30 auszuwählen.

Eine entsprechende Auswahl kann automatisch und/oder in Abhängigkeit einer Benutzereingabe erfolgen. Erfindungsgemäß ist es denkbar, zumindest eine bevorzugte Leistungsstufe für eine bestimmte Außentemperatur und/oder einen bestimmten Ladezustand der Batterie für den Benutzer besonders zu kennzeichnen.

In einem Ausführungsbeispiel können bestimmte Steuerbefehle bzw. Menüpunkte aufgrund der empfangenen Fahrzeugdaten ausgeblendet werden. Beispielsweise kann in dem bereits beschriebenen Ausführungsbeispiel, bei dem ein bestimmter Heizkreislauf ausgewählt wird, ein Bedienelement, das üblicherweise die Nutzung der beiden Heizkreisläufe erlaubt, ausgeblendet sein. Ebenso kann bei einem kritischen Ladezustand der Batterie ein Benutzerelement, das üblicherweise das Starten des Heizers 30 ermöglicht, ausgeblendet sein.

Weiterhin ist es möglich, basierend auf den empfangenen Informationen, beispielsweise Füllzustand des Tanks und/oder Ladezustand der Batterie, eine maximale Laufzeit des Heizers 30 zu berechnen. Des Weiteren ist es denkbar, in Abhängigkeit von der berechneten Laufzeit und/oder kurz vor dem Erreichen eines kritischen Zustands, den Heizer 30 aktiv über einen entsprechenden Steuerbefehl abzuschalten, so dass die Kernfunktionen des Fahrzeugs 1 nicht beeinträchtigt werden.

Der beschriebene W-Bus 40 kann erfindungsgemäß durch ein beliebiges Bussystem, z.B. CAN oder LIN, ersetzt werden.

Die Lüftungseinrichtung 20 kann anstelle eines PWM Signals oder zusätzlich zu dem PWM Signal mit der Gatewayeinrichtung 60, z.B. über ein Bussystem, kommunizieren. Das aufsteckbare LTE-Modul 68 kann erfindungsgemäß ein beliebiges aufsteckbares Kommunikationsmodul zur Kommunikation über ISM/WiFi, 2G/3G/4G oder ähnlichen Standards sein.

In zumindest einem Ausführungsbeispiel wird eine Verbindung mit dem Internet über ein zelluläres Netzwerk, z.B. via LTE, beschrieben. Eine entsprechende Verbindung zum Internet kann auch über ein lokales Netzwerk hergestellt werden

### Bezugszeichenliste

- 1: Fahrzeug
- 2: Bedienelement
- 3: Lüfterklappe
- 4: Internet
- 20: Lüftungseinrichtung
- 21: Lüftungsverbindung
- 30: Heizer/Standheizung
- 40: Klimabus, W-Bus
- 41, 41', 41": Anschluss für W-Bus
- 42: Fahrzeugbus, LIN-Bus
- 43, 43': Anschluss für Fahrzeugbus/LIN-Bus
- 55: Recheneinheit bzw. Mikrocontroller
- 60: Gatewayeinrichtung
- 61: Recheneinrichtung/Mikrocontroller
- 62: Bluetooth-Modul
- 63, 63': BUS-Kommunikationseinrichtung
- 65: Speichereinrichtung
- 66: Temperatursensor
- 70: (mobiles) Endgerät
- 71: Recheneinrichtung
- 72: Speichereinrichtung
- 74: Bluetooth-Modul
- 76: Touchscreen
- 75: UTMS-Modul
- 80: Klimabedienteil
- 100: Server

## Patentansprüche

1. Verfahren zum Steuern mindestens einer Klimaeinrichtung (30) eines Fahrzeugs (1), umfassend die nachfolgenden Schritte, die von einem mobilen Endgerät (70) durchgeführt werden:
- Abfragen von ersten Statusdaten von einem ersten Bus, vorzugsweise einem Klimabus (41), der mit der mindestens einen Klimaeinrichtung (30) verbunden ist, über eine Funkschnittstelle;
- Abfragen von zweiten Statusdaten von einem zweiten Bus, insbesondere einem Fahrzeugbus (42), der mit mindestens einem Aktuator und/oder Sensor verbunden ist, über die Funkschnittstelle;
- Anzeigen der ersten und zweiten Statusdaten auf einem Display (76);
- Empfangen mindestens einer Benutzereingabe;
- Verarbeitung der Benutzereingabe;
- Erstellen eines Steuerbefehls basierend auf der Benutzereingabe und mindestens einem Datenelement der ersten und/oder zweiten Statusdaten;
- Übermitteln des Steuerbefehls über die Funkschnittstelle an die Klimaeinrichtung (30).

2. Verfahren nach Anspruch 1, wobei basierend auf mindestens einem Datenelement der ersten Statusdaten und mindestens einem Datenelement der zweiten Statusdaten ein Wert errechnet und angezeigt wird.

3. Verfahren nach einem der vorhergehenden Ansprüche, wobei zumindest einige Statusdaten mittelbar über eine Gatewayeinrichtung (60) abgefragt werden.

4. Verfahren nach einem der vorhergehenden Ansprüche, umfassend:
- ein Prüfen der Verfügbarkeit einer Reihe von Kommunikationskanälen zu einer/der Gatewayeinrichtung (60) des Fahrzeugs (1);
- ein Auswählen eines Kommunikationskanals in Abhängigkeit von der Verfügbarkeit und einer Prioritätenliste, wobei das Abfragen der ersten und/oder zweiten Statusdaten über den ausgewählten Kommunikationskanal erfolgt.

5. Verfahren nach einem der vorhergehenden Ansprüche, umfassend:
- ein Auslesen eines Benutzerprofils aus einer Speichereinrichtung (72) eines mobilen Endgeräts (70);
- ein Verarbeiten von Daten des Benutzerprofils;
- ein Generieren mindestens eines Steuerbefehls basierend auf den Daten des Benutzerprofils;
- ein Übermitteln des Steuerbefehls an die Klimaeinrichtung (30) und/oder eine Komponente des Fahrzeugs (1), vorzugsweise unter Verwendung einer/der Gatewayeinrichtung (60).

6. Verfahren nach einem der vorhergehenden Ansprüche, umfassend:
- ein Abfragen und ggf. Anzeigen eines Ladezustands einer Batterie eines Fahrzeugs (1); und/oder
- ein Abfragen und ggf. Anzeigen eines Tankfüllzustands des Fahrzeugs.

7. Mobiles Endgerät (70) zum Steuern mindestens einer Klimaeinrichtung, umfassend:
- mindestens eine Recheneinrichtung (71);
- mindestens eine Speichereinrichtung (72) mit Instruktionen, wobei die Instruktionen das Verfahren nach einem der vorhergehenden Ansprüche implementieren, wenn diese auf der mindestens einen Recheneinrichtung (71) ausgeführt werden;
- mindestens eine Funkkommunikationseinrichtung (74, 75) zur Abfrage der ersten und/oder zweiten Statusdaten und/oder zum Übermitteln des Steuerbefehls.

8. System, umfassend:
- ein mobiles Endgerät (70) nach Anspruch 7;
- eine Gatewayeinrichtung (60), die mindestens eine, insbesondere aufsteckbare, Kommunikationseinrichtung (62) zur drahtlosen Kommunikation umfasst, wobei die Kommunikationseinrichtung (62) zur Kommunikation, insbesondere mittels Bluetooth, mit dem mobilen Endgerät (70) ausgebildet ist.

9. System nach Anspruch 8, wobei die Gatewayeinrichtung (60) eine erste Kommunikationseinrichtung (63) zum Empfangen von ersten Statusdaten, insbesondere Klimadaten, vom ersten Bus und/oder eine zweite Kommunikationseinrichtung (63') zum Empfangen von zweiten Statusdaten, insbesondere Fahrzeugdaten, vom zweiten Bus umfasst.

10. System nach Anspruch 8 oder 9, wobei die Gatewayeinrichtung (60) umfasst:
- eine/die erste, insbesondere aufsteckbare, Kommunikationseinrichtung (62) zum drahtlosen Kommunizieren via Bluetooth und/oder WiFi mit dem mobilen Endgerät (70); und
- eine zweite, insbesondere aufsteckbare, Kommunikationseinrichtung, z.B. ein GSM-Modul oder UMTS-Modul, zum Kommunizieren mit dem mobilen Endgerät (70) über ein zelluläres Netzwerk.

11. System nach einem der Ansprüche 8 bis 10, wobei die Gatewayeinrichtung (60) umfasst:
- mindestens eine Recheneinrichtung (61);
- mindestens eine Speichereinrichtung mit Instruktionen, wobei die Instruktionen einen Webserver implementieren, wenn diese auf der Recheneinheit ausgeführt werden.

12. Computerlesbares Speichermedium, welches Instruktionen zum Steuern mindestens einer Klimaeinrichtung enthält, die mindestens einen Prozessor dazu veranlassen, ein Verfahren nach einem der Ansprüche 1 bis 6 zu implementieren, wenn die Instruktionen durch den mindestens einen Prozessor ausgeführt werden.

## Claims

1. Method for controlling at least one air conditioning device (30) of a vehicle (1), comprising the following steps performed by a mobile terminal (70):
- querying first status data from a first bus, preferably an air-conditioning bus (41), which is connected to the at least one air-conditioning device (30), via a radio interface;
- querying second status data from a second bus, in particular a vehicle bus (42), which is connected to at least one actuator and/or sensor, via the radio interface;
- displaying the first and second status data on a display (76);
- receiving at least one user input;
- processing the user input;
- creating a control command on the basis of the user input and at least one data element of the first and/or second status data;
- transmitting the control command to the air-conditioning device (30) via the radio interface.

2. Method according to claim 1, wherein
a value is calculated on the basis of at least one data element of the first status data and at least one data element of the second status data and is displayed.

3. Method according to one of the preceding claims, wherein
at least some status data are indirectly queried via a gateway device (60).

4. Method according to one of the preceding claims, comprising:
- checking an availability of a number of communication channels to a/the gateway device (60) of the vehicle (1);
- selecting a communication channel on the basis of the availability and a priority list, wherein the first and/or second status data are queried via the selected communication channel.

5. Method according to one of the preceding claims, comprising:
- reading a user profile from a storage device (72) of a mobile terminal (70);
- processing data from the user profile;
- generating at least one control command on the basis of the data from the user profile;
- transmitting the control command to the air-conditioning device (30) and/or a component of the vehicle (1), preferably using a/the gateway device.

6. Method according to one of the preceding claims, comprising:
- querying and optionally displaying a state of charge of a battery of a vehicle (1); and/or
- querying and optionally displaying a tank filling level of the vehicle.

7. Mobile terminal (70) for controlling at least one air conditioning device, comprising:
- at least one computing device (71);
- at least one storage device (72) containing instructions, wherein the instructions implement the method according to one of the preceding claims, when these are carried out on the at least one computing device (71);
- at least one radio communication device (74, 75) for querying first and/or second status data and/or for transmitting the control command.

8. System, comprising:
- a mobile terminal (70) according to claim 7;
- a gateway device (60), which comprises die at least one communication device (62), in particular a plug-on communication device, for wireless communication, wherein the communication device (62) is designed to communicate with the mobile terminal (70), particularly via Bluetooth.

9. System according to claim 8, wherein
the gateway device (60) comprises a first communication device (63) for receiving first status data, in particular air conditioning data, from the first bus and/or a second communication device (63') for receiving second status data, in particular vehicle data, from the second bus.

10. System according to claim 8 or 9, wherein
the gateway device (60) comprises:
- a/the communication device (62), in particular a plug-on communication device (62), for wireless communication with the mobile terminal (70) via Bluetooth and/or WiFi; and
- a second communication device, in particular a plug-on communication device, such as a GSM-Module or UMTS-Module, for wireless communication with the mobile terminal (70) via a cellular network.

11. System according to any one of claims 8 to 10, wherein
the gateway device (60) comprises:
- at least one computing device (61);
- at least one storage device containing instructions, wherein the instructions implement a web server, when these are carried out on the computing device.

12. Computer-readable storage medium, which includes instructions for controlling at least one air conditioning device, that cause at least one processor to implement a method according to any one of claims 1 to 6 when the instructions are carried out by the at least one processor.

## Revendications

1. Procédé de commande d'au moins un dispositif de climatisation (30) d'un véhicule (1), le procédé comprenant les étapes suivantes qui sont réalisées par un terminal mobile (70) :
- demander des premières données d'état sur un premier bus, de préférence un bus de climatisation (41), qui est relié à au moins un dispositif de climatisation (30), par le biais d'une interface radio ;
- demander des deuxièmes données d'état sur un deuxième bus, notamment un bus de véhicule (42), qui est relié à au moins un actionneur et/ou capteur, par le biais de l'interface radio ;
- afficher les premières et deuxièmes données d'état sur un afficheur (76) ;
- recevoir au moins une entrée d'utilisateur ;
- traiter l'entrée d'utilisateur ;
- créer une instruction de commande sur la base de l'entrée d'utilisateur et d'au moins un élément de données des premières et/ou deuxièmes données d'état ;
- transmettre l'instruction de commande par le biais de l'interface radio au dispositif de climatisation (30) .

2. Procédé selon la revendication 1,
une valeur étant calculée et affichée sur la base d'au moins un élément de données des premières données d'état et d'au moins un élément de données des deuxièmes données d'état.

3. Procédé selon l'une des revendications précédentes,
au moins certaines données d'état étant demandées indirectement par le biais d'un dispositif de passerelle (60).

4. Procédé selon l'une des revendications précédentes, comprenant les étapes suivantes :
- vérifier la disponibilité d'un certain nombre de canaux de communication vers un/le dispositif de passerelle (60) du véhicule (1) ;
- sélectionner un canal de communication en fonction des disponibilités et d'une liste de priorité, la demande de premières et/ou deuxièmes données d'état étant effectuée par le biais du canal de communication sélectionné.

5. Procédé selon l'une des revendications précédentes, comprenant les étapes suivantes :
- lire un profil d'utilisateur dans un dispositif de mémorisation (72) d'un terminal mobile (70) ;
- traiter des données du profil d'utilisateur ;
- générer au moins une instruction de commande sur la base des données du profil d'utilisateur ;
- transmettre l'instruction de commande au dispositif de climatisation (30) et/ou à un composant du véhicule (1), de préférence à l'aide d'un/du dispositif de passerelle (60).

6. Procédé selon l'une des revendications précédentes, comprenant les étapes suivantes :
- demander et éventuellement afficher un état de charge d'une batterie d'un véhicule (1) ; et/ou
- demander et éventuellement afficher un état de remplissage de réservoir du véhicule.

7. Terminal mobile (70) destiné à commander au moins un dispositif de climatisation, ledit terminal comprenant :
- au moins un dispositif informatique (71) ;
- au moins un dispositif de mémorisation (72) comprenant des instructions, les instructions mettant en œuvre le procédé selon l'une des revendications précédentes lorsqu'elles sont exécutées sur l'au moins un dispositif informatique (71) ;
- au moins un dispositif de radiocommunication (74, 75) destiné à demander les premières et/ou deuxièmes données d'état et/ou à transmettre l'instruction de commande.

8. Système comprenant :
- un terminal mobile (70) selon la revendication 7 ;
- un dispositif de passerelle (60) qui comprend au moins un dispositif de communication (62), en particulier enfichable, destiné à la communication sans fil, le dispositif de communication (62) étant conçu pour communiquer, en particulier par Bluetooth, avec le terminal mobile (70).

9. Système selon la revendication 8,
le dispositif de passerelle (60) comprenant un premier dispositif de communication (63) destiné à recevoir des premières données d'état, en particulier des données de climatisation, du premier bus et/ou un deuxième dispositif de communication (63') destiné à recevoir des deuxièmes données d'état, en particulier des données de véhicule, du deuxième bus.

10. Système selon la revendication 8 ou 9,
le dispositif de passerelle (60) comprenant :
- un/le premier dispositif de communication (62), notamment enfichable, destiné à communiquer sans fil par Bluetooth et/ou WiFi avec le terminal mobile (70) ; et
- un deuxième dispositif de communication, notamment enfichable, par exemple un module GSM ou un module UMTS, destiné à communiquer avec le terminal mobile (70) par le biais d'un réseau cellulaire.

11. Système selon l'une des revendications 8 à 10,
le dispositif de passerelle (60) comprenant :
- au moins un dispositif informatique (61) ;
- au moins un dispositif de mémorisation comprenant des instructions, les instructions implémentant un serveur Web lorsqu'elles sont exécutées sur l'unité informatique.

12. Support de stockage lisible par ordinateur contenant des instructions de commande d'au moins un dispositif de climatisation qui ordonnent à au moins un processeur de mettre en œuvre un procédé selon l'une des revendications 1 à 6 lorsque les instructions sont exécutées par l'au moins un processeur.
